# EUROPÄISCHE PATENTSCHRIFT

(11) **EP 1 414 880 B1**
(45) Veröffentlichungstag und Bekanntmachung des Hinweises auf die Patenterteilung: **11.05.2005**
(21) Anmeldenummer: 02764549.8
(22) Anmeldetag: 09.08.2002
(51) Int. Cl.: C08G 18/38, C08K 3/36

(54) **VERFAHREN ZUR HERSTELLUNG VON KIESELSÄURE/POLYURETHAN-NANOKOMPOSITEN**
METHOD FOR PRODUCING SILICIC ACID/POLYURETHANE NANOCOMPOSITES
PROCEDE DE PRODUCTION DE NANOCOMPOSITES A BASE D'ACIDE SILIQUE/DE POLYURETHANE

(30) Priorität: 10.08.2001 DE 10139451
(43) Veröffentlichungstag der Anmeldung: 06.05.2004
(73) Patentinhaber: Chemiewerk Bad Köstritz GmbH, 07586 Bad Köstritz (DE)
(72) Erfinder: TSCHRITTER, Hartmut, 07546 Gera (DE); KNÖLLE, Gabriele, 07586 Bad Köstritz (DE); OEHLERT, Hannelore, 10369 Berlin (DE); OTTOW, Manfred, 13465 Berlin (DE); RÜBNER, Joachim, 13088 Berlin (DE)
(74) Vertreter: Bergmann, Simon
(86) Internationale Anmeldenummer: PCT/DE2002/002990
(87) Internationale Veröffentlichungsnummer: WO 2003/016370

(56) Entgegenhaltungen:
- EP-A- 0 039 666
- WO-A-00/44669
- WO-A-00/64969
- DE-A- 19 933 819

## Beschreibung

Die Erfindung betrifft ein Verfahren zur Herstellung von Kieselsäure/Polyurethan-Nanocompositen.

Die Erfindung hat das Ziel, Kieselsäurekolloide unter Erhalt der nanoteiligen Korngröße von Polykieselsäuren gemeinsam mit organischen Komponenten wie Polyetherpolyolen oder Polyetheresterpolyolen in situ mit Polyisocyanaten in Kieselsäure/Polyurethan-Nanocomposite zu überführen.

Unter Nutzung der funktionellen Gruppen der organischen Komponenten werden durch Polyadditionsreaktion mit mehrwertigen Isocyanaten in situ Polyurethansysteme erzeugt. Die entstehenden, kolloidale Kieselsäure enthaltenden Polyurethane können in Abhängigkeit von der Rezeptierung in Hart-, Weich- und Integralschaumstoffe, kompakte Elastomere und elastische Folien überführt werden. Aus der nanoskalierten Verteilung der Kieselsäure im Polyurethan folgen neue Eigenschaftsprofile der erzeugten Werkstoffe. Sie betreffen insbesondere die Verbesserung des dynamisch-mechanischen Verhaltens, die Hydrophiliebalance, die Permeationseigenschaften oder das Brandverhalten.

### Hintergrund der Erfindung

Zur Kombination von Kieselsäure bzw. Polykieselsäuren mit Polymeren stehen grundsätzlich vier verschiedene Möglichkeiten offen. Zum einen kann Wasserglas als Kieselsäurelieferant dienen. Des weiteren können feste, fein verteilte Kieselsäuren wie hochdisperse Kieselsäuren, mikronisierte Kieselgele, Aerosile, Aerogele oder Zeolithpulver oder ähnliche Handelsprodukte als Füllstoffe in Kunststoffe eingearbeitet werden. Ein dritter Weg besteht darin, organische Siliziumverbindungen als *carrier* für den Kieselsäureeinbau zu verwenden. Schließlich werden wässrige Kieselsole als potentielle Partner bei der Herstellung von Kieselsäure / Polymer-Verbunden beschrieben.

Die Erzeugung von Organo-Mineralsystemen aus wässrigen Lösungen von Alkalisilikaten (Wasserglas) ist auf dem Polyurethangebiet seit langem bekannt (D. Dieterich, Angew. Makromol. Chem. 76/77 (1979) 79; DE-OS 23 59 609 (1973), P. H. Markusch, M. I. Iliopulos, D. Dieterich, Adv. Urethane Sci. Technol. 8 (1981) 263). Hier werden Polyisocyanate in der wässrigen, alkalischen Silikatlösung emulgiert. Die basisch katalysierte Isocyanat/Wasser-Reaktion führt zu einem Polyhamstoffgerüst. Frei werdendes Kohlendioxid härtet das Wasserglas. Es entsteht ein Zweiphasenkunststoff, der letztlich aus einer Polyharnstoffmatrix und einem festen Polykieselsäuregel zusammengesetzt ist An Stelle von Wasserglas können auch alkalische Kieselsole, Lösungen von Aluminaten, Boraten oder wässrige Dispersionen anderer anorganischer Füllstoffe eingesetzt werden. Wesentliches Merkmal dieser anorganisch-organischen Polyurethansysteme ist deren erhöhte Feuerwiderstandsdauer. Ein zunehmender Gehalt an Füllstoff (Kieselsäure) führt jedoch zur Verschlechterung der mechanischen Eigenschaften. Im Extremfall kommt es zur makroskopischen Entmischung der Komponenten und der Zweiphasenverbund zerfällt

Wird feinverteilte feste Kieselsäure gemäß US-PS 2,739,076 in Polymere oder Polymervorprodukte eingearbeitet, entstehen anorganisch-organische Blends, deren Füllgrad begrenzt ist. Voraussetzung für die Verbundbildung ist die Mischbarkeit der Komponenten im fluiden Zustand. Dabei ist die große und stark zerklüftete Oberfläche derartiger fester Kieselsäuren nachteilig. So führt z. B. das Einbringen von nur 10 Masseprozent Aerosil 200 in ein niedrigviskoses Alkydharzvorpolykondensat zu einem sehr starken Anstieg der Viskosität und die Möglichkeiten seiner Weiterverarbeitung werden stark eingeschränkt. Das Imprägnieren einer porösen Matrix gelingt nur noch unzureichend, so dass das angestrebte Ziel, ein Verbundmaterial mit verminderter Brennbarkeit zu erzeugen, nicht erreicht wird. So wurde von der Anmelderin festgestellt, dass beispielsweise ein mit einem Aerosil/Alkydharz-Gemisch imprägniertes Holz beim Brandversuch einen mehr als doppelt so hohen Gewichtsverlust und eine um 50% längere Brenndauer aufweist als nicht imprägniertes Holz (siehe hierzu weiter unten). Werden fein verteilte Zeolithe (Natrium-Aluminiumsilikate) als anorganische Komponenten in Verbunden verwendet, ist die Größenordnung des Füllgrades aus einem weiterem Grund begrenzt. Zeolithe nehmen aus der Umgebung intensiv Wasser auf - hierauf beruht ihre Wirkung als Trockenmittei - und die feste Bindung der Wassermoleküle an ihren inneren und äußeren Oberflächen führt zur Beeinträchtigung der Langzeitstabilität der Verbundwerkstoffe. Der Zeolith-Anteil im Verbund sollte 5 Gew.-% nicht überschreiten (R. Becker, Polyurethane, Fachbuchverlag Leipzig (1973) 67).

Während die bisher aufgeführten Methoden zur Erzeugung von Kieselsäure/Polymer-Kompositionen zu festen Mischungen führen, in denen die Größe der Kieselsäureteilchen mehrere bis einige hundert µm beträgt und daraus Tendenzen der makroskopischen Phasensepararation und Entmischung erwachsen, wird für Nanocomposite, die aus Polymeren und nanoskaligen SiO₂-Partikeln bestehen, ein signifikant verbessertes Eigenschaftsprofil beschrieben. Als Partner für die kolloidal verteilte Kieselsäure fungieren Epoxidharze, Polyurethane, Acrylat- und Alkydharzsysteme. Die Erzeugung der Nanopartikel ist derzeit noch in der Entwicklung begriffen und neben dem Sol/Gel-Verfahren, (S. Kang, S. Hong, C.R. Choe, M. Park, S. Rim, J. Kim, Polymer 42 (2001) 879) sind Reaktionen im Plasma oder die Oxidation von Tetrachlorsilanen in einer Flamme in der Erprobung. Die zuletzt genannten Verfahren sind nicht nur unter dem Aspekt der Wirtschaftlichkeit für die Erzeugung von Kieselsäure/Polymer-Nanoverbunden ohne praktische Relevanz. Zusätzliche Prozeßstufen zur Synthese von Halogensilanen sind aufwendig und umweltbelastend. Die Oxidation in der Flamme wird ebenso wie das Plasmaverfahren noch wenig beherrscht. Neben den gewünschten Nanopartikeln entstehen Aggregate und Agglomerate. Die Ausbeute an Nanoteilchen, die zudem von den Nebenprodukten abgetrennt werden müssen, ist gering (T. Adebahr, Farbe und Lack 107 (2000) 192).

Auf die erfolgreiche Anwendung kolloidaler wässriger Kieselsäure als Partner bei der Erzeugung eines Kieselsäure/Polymer-Verbundes wird in der DE 198 17 555 hingewiesen. Ein basisches Kieselsol wird in ein Alkydharz eingeführt und die Anwendung des Polymerverbundes als Poliermittel beschrieben. Die Eingrenzung auf nur diese eine Anwendung ist von der Chemie des erzeugten Verbundmaterials diktiert; denn es unterliegt bei Einfluss von Luftfeuchte und in allgemein wässriger Umgebung einem schnellen chemischen Abbau. Die alkalische Hydrolyse der Alkydharzkomponente führt in kurzer Zeit zum völligen Verlust der physikalischmechanischen Eigenschaften. Diese für ein Poliermittel nützliche Eigenschaft, bei der Anwendung zu hydrolysieren und dabei Kieselsäure bzw. Silikatanionen freizusetzen und so zum chemischen Ausheilen einer zu polierenden Glasoberfläche beizutragen, steht einer Nutzung dieses Kieselsäure/Polymer-Verbundes als Werkstoff jedoch entgegen.

In der DE-A-199 33 819 wird die Herstellung von Polyurethan elastomeren beschrieben, die nanoskaliges SiO₂ enthalten.

Darüber hinaus wird in der US-PS 5,902,226 die Umwandlung eines Kieselsols in ein Alkoholsol durch den Austausch des Wassers gegen Propanol und/oder Methanol beschrieben. Zur Herstellung von Beschichtungsmassen dienen gemäß US-PS 4,351,919 Mischungen aus wäßriger Kieselsäure, Polyolen und organischen Polysäuren, denen ungesättigte Polysäuren und Vinylmonomere sowie übliche radikalische Initiatoren und Beschleuniger beigefügt werden. Es entstehen bei thermischer Aushärtung Kieselsäure enthaltende Polyesterverbindungen. In der US-PS 3,351,561 wird die Modifizierung (Hydrophobisierung) von Kieselsäurepartikeln beschrieben. Es werden in Wasser dispergierte Kieseläurepartikel mit einem wassermischbaren, monofunktionellen Alkoxyalkohol zu organisch modifizierten Kieselsäureteilchen umgesetzt, deren Oberflächeneigenschaften hierdurch signifikant verändert sind. Während hier die Salzfreiheit des Materials betont wird, ist in der US-PS 2,974,105 die Mitwirkung von Salzen zur Stabilisierung der Organosole beschrieben.

Ausgehend von diesem Stand der Technik ist es Aufgabe der vorliegenden Erfindung, ein Verfahren zur Herstellung von Kieselsäure/Polyurethan-Verbindungen zur Verfügung zu stellen, welches zu Produkten mit verbesserten Eigenschaften führt.

Diese Aufgabe wird durch die Merkmale des Anspruch 1 gelöst.

Bislang sind Polyurethane mit anorganischen kolloidal verteilten Kieselsäuren nicht bekannt. Die bekannten Kieselsäure enthaltenen Polyurethane enthalten Kieselsäure im µm-Bereich. Dies führt in der Regel dazu, dass die entsprechenden Polyurethane eine derart hohe Viskosität aufweisen, dass damit weitere Anwendungen außerordentlich schwierig wenn nicht sogar unmöglich sind.

Die vorliegende Erfindung stellt Kieselsäure/Polyurethan-Verbindungen bereit, bei denen Kieselsäure kolloidal verteilt unter Erhalt der ursprünglichen Partikelgröße, d.h. im Nanometerbereich im Polyurethan enthalten ist (sogenannte Nanomomposite).

Bei der Lösung der Aufgabe musste das grundsätzliche Problem der Unverträglichkeit von hydrophiler Polykieselsäure und hydrophober organischer Komponente gelöst werden. Diese Unverträglichkeit führt bei physikalischen oder chemischen Prozeduren im einfachsten Falle zum Verlust der nanoskalierten Verteilung der Kieselsäure, im anderen Falle zur Entmischung der Systeme bzw. zum Ausfallen der Kieselsäure in Form nicht mehr löslicher (SiO₂)ₓ-Konglomerate.

Überraschend wurde nun gefunden, dass die Bildung homogener Nanocomposite gelingt, wenn Verträglichkeit zwischen hydrophiler Polykieselsäure und den organischen Komponenten dadurch hergestellt wird, dass solche Komponenten eine bestimmte, von ihrer Struktur ausgehende Hydrophiliebalance aufweisen. Die Erfindung sieht daher vor, dass die zur Polyurethanherstellung verwendeten Polyole eine bestimmte Hydrophiliebalance aufweisen müssen, auf deren Grundlage die Verträglichkeit zwischen organischen und anorganischen Komponenten während der Prozeduren, Reaktionen und in den resultierenden Materialien langfristig gewährleistet ist. Die geforderte Hydrophiliebalance der Polyole wiederum hängt von deren Struktur, d.h. ihrer quantitativen Zusammensetzung aus hydrophilen und hydrophoben Bausteinen sowie ihrer Funktionalität ab. Erfindungsgemäß ist vorgesehen, dass es sich bei den Polyolen um Polyether- und Polyetherester polyole oder deren Mischungen handelt.

Diese strukturbestimmte Hydrophiliebalance liegt dann vor, wenn beispielsweise bei Polyetheralkholen, die aus Ethylenoxid und Propylenoxid bestehen, der Ethylenoxidanteil mindestens 10 Gew.% beträgt. Die Erfindung sieht daher vor, dass wenigstens 10 Gew.% Ethylenoxidbausteine der organischen Polyol-Komponenten (bezogen auf Gesamtalkylenoxide) bei gleichzeitigem Vorliegen einer wenigstens zweifunktionellen OH-Endgruppenfunktionalität der organischen Komponente verwendet werden.

Wird dieser hohe Ethylenoxidanteil, bezogen auf die Summe aller Alkylenoxidbausteine im Polyether- oder Polyesteretheralkohol, nicht erreicht, ist zur Gewährleistung der Verträglichkeit zwischen der kolloidalen Kieselsäure und den organischen Komponenten eine hohe Konzentration an OH-Endgruppen erforderlich. Die Funktionalität dieser Polyolkomponenten muss dann vier, fünf oder sechs betragen. Erfindungsgemäß ist daher vorgesehen, dass bei Verwendung von weniger als 10 Gew.% Ethylenoxidbausteinen der Polyol-Komponenten (bezogen auf Gesamtalkylenoxide) gleichzeitig wenigstens eine vierfunktionelle OH-Endgruppenfunktionalität der organischen Komponente vorliegen muss.

Weiter ist vorgesehen, dass die anorganische Kieselsäure mit einem Aluminiumgehalt der wässrigen Kieselsäurekolloide zwischen 0,01 -1,00 Gew.%, bevorzugt 0,02 - 0,60 Gew.%, aluminiummodifiziert ist.

Auf der Basis der anorganische kolloidale Kieselsäure enthaltenen Polyol-Komponente zur Polyurethanherstellung lassen sich die aus der herkömmlichen Polyurethanchemie bekannte Reaktionen und Verfahren nach bekannter Chemie durchführen. Besonderes Merkmal der Erfindung ist, dass die ursprünglichen Partikelgröße der anorganischen Kieselsäure im Polyol und späteren Polyurethan erhalten bleibt (Partikelgröße im Nanobereich). Dadurch ergeben sich völlig neue Eigenschaften der damit hergestellten Polyurethane. Derartig hergestellte Polyurethane sind beispielsweise im Brandschutz als Flammschutzmittel verwendbar. Der Vorteil liegt darin, dass nur auf natürliche Ressourcen zurückgegriffen wird, ohne auf - in der Regel giftige ― Additive zurückgreifen zu müssen.

Die erfindungsgemäß hergestellten Nanoverbunde verfügen aufgrund der kolloidalen Verteilung der anorganischen Komponente im resultierenden Feststoff über überraschende, nicht vorhersehbare und besondere Eigenschaften. Grundlage dieser neuen Eigenschaften ist die Tatsache, dass in den neuartigen, erfindungsgemäß hergestellten anorganisch-organischen Nanoverbunden Polykieselsäure langzeitstabil kolloidal verteilt ist Die Nanoverteilung der Kieselsäure besteht durch die erfindungsgemäße Art der Reaktionsführung fort. In den Polyurethan-Produkten liegt eine (im beispielsweise Rasterelektronenmikroskop (REM) nachgewiesene (Bilder nicht gezeigt)) nanoskalierte Verteilung der anorganischen Komponente vor, die das besondere Eigenschaftsprofil der Kieselsäure/Polyurethan-Nanocomposite bestimmen. Die entsprechend dem erfindungsgemäßen Verfahren hergestellten Kieselsäure/Polyurethan-Nanokomposite weisen einen nanoverteilten Feststoffgehalt an anorganischer Kieselsäure von bis zu 30 Gew.% auf. Beste Ergebnisse bei späteren Anwendungen werden mit solchen Kompositen erzielt, die einen Feststoffgehalt an anorganischer Kieselsäure von 7 bis 15% Gew.% aufweisen.

Im Rahmen des Herstellungsverfahrens der Kieselsäure/Polyurethan-Nanokomposite ist in der Regel davon auszugehen, dass zwischen 50-60 Gew.% anorganischer Kieselsäure im Polyethersystem eingesetzt werden muss, um ca. 30 Gew.% an kolloidal verteilter anorganischer Kieselsäure im Polyurethan zu erhalten.

In nachfolgender Tabelle werden ausgewählte Eigenschaften von Kieseisäure/Polyurethan-Nanocompositen gezeigt und analog hergestellten, kieselsäurefreien Polyurethanen gegenübergestellt.

**Tabelle 1:**

| Beispiele für Materialeigenschaften von Kieselsäure/Polyurethan-Nanocompositen und analog hergestellten, kieselsäurefreien Polyurethanen | | | |
|---|---|---|---|
| Material¹⁾ | Eigenschaft | Kieselsäure / Polyurethan-Nanokomposit gemäß der Erfindung | Polyurethan (kieselsäurefrei) |
| | Kieselsäuregehalt [Gew.%] | 15 | 0 |
| kompakt, hart | Nachbrenndauer²⁾ [s] | 13-17 | 28-39 |
| geschäumt, hart | Wasseraufnahme [Gew.%] | 3,4 - 3,5 | 3,6 - 4,2 |
| geschäumt, hart | Rohdichte [g/cm³] | 0,16 - 0,20 | 0,28 - 0,29 |
| geschäumt, hart | Porosität [%] | 85 - 87 | 45 - 61 |
| geschäumt, | Glastemperatur [°C] | 29 und 66 | 29 |
| hart | | | |
| geschäumt, weich | Glastemperatur [°C] | -5 und 54 | -5 |

| | | | |
|---|---|---|---|
| ¹⁾ Herstellung der Kieselsäure / Polyurethan-Nanokomposite und des zum Vergleich herangezogenen kieselsäurefreien Polyurethans jeweils gem. Beispiel 4 | | | |
| ²⁾ Werte aus je 100 Einzelmessungen (10mal Nachbrenndauer an 10 Einzelproben) | | | |

Erfindungsgemäß ist vorgesehen, dass das in wässrigen Kieselsäurekolloiden mit einem pH-Bereich ca. 2 < pH < ca. 6,8 enthaltene Wasser quantitativ durch Hydroxyl- oder Aminogruppen tragende organische Verbindungen, die ggf. Aluminiummodifiziert sind, substituiert wird. Im mäßigen Vakuum (Enddruck p: ca. 18 < p < ca. 25 mbar) wird bei leicht erhöhter bzw. ansteigender Temperatur (Endtemperatur T: ca. 318 < T < ca. 328 K) aus einer Mischung des wässrigen Kieselsäurekolloids mit oligomeren und polymeren Alkoholen wie Polyether-alkoholen, die vorteilhaft über verschieden reaktive Hydroxylgruppen und im Falle von oligomeren bis polymeren Alkoholen über mehrere Sauerstofffunktionen entlang der Oligomer- bzw. Polymerkette verfügen, unter Erhalt des kolloidalen Zustands das Wasser des Kolloids bis zur Gewichtskonstanz entfernt.

Dabei entstehen optisch klare bis opake, mittel- bis hochviskose kolloidale Kieselsäure enthaltende mehrfunktionelle Polyether-oder Polyetheresteralkohole oder Mischungen derselben, die mit dem/den bei der Substitution des Wassers verwendeten Polyolen rückverdünnt werden können. Auf diese Weise kann die für Folgereaktionen erforderliche Konzentration funktioneller Gruppen ebenso wie der Gehalt an kolloidaler Kieselsäure (Feststoffgehalt) gezielt eingestellt werden. Ferner wird die Stabilität des entstandenen polyolbasierten Kieselsäurekolloids vorteilhaft durch Hinzufügen von zur Ausbildung von Wasserstoffbrücken befähigten und/oder grenzflächenaktiven (als Emulgator, Verträglichkeitsvermittler oder Benetzer wirkenden) Verbindungen erhöht, z.B. auch Tenside und/oder Stabilisatoren.

Erfindungsgemäß gelingt die Erzeugung der polyolbasierten Kieselsäurekolloide (= Organokieselsäurekolloide) vorteilhaft bei Verwendung von Polyolen, die primäre und sekundäre, also verschieden reaktive OH-Endgruppen enthalten, hierzu gehören insbesondere lineare und verzweigte Oligo- und Polyether- und Polyetheresteralkohole oder deren Mischungen. Gegebenenfalls sind die bei der Herstellung der Organokolloide verwendeten Kieselsole aluminiummodifiziert. Der Aluminiumgehalt liegt bei 0,01 bis 1,00 Gew.%, bevorzugt bei 0,02 bis 0,60 Gew.% .

Bei den erfindungsgemäß durchgeführten Prozessen und Reaktionen kommen vorzugsweise wässrige Kieselsäurekolloide zum Einsatz, die nach der Herstellung zu Organokolloiden folgende Eigenschaften aufweisen:

**Tabelle 2**

| | |
|---|---|
| pH-Wert | 2-10 |
| Viskosität | 250 - 27.000 mPa s, bevorzugt 400 8.000 mPa s |
| spezifische Oberfläche der Kieselsäurepartikel | 30 - 1000 m²/g, bevorzugt 60 - 300 m²/g |
| Funktionalität der organischen Komponente | 2 - 6, bevorzugt 2 - 4 |
| Kieselsäure (Feststoff) Anteil | bis 70 Gew.%, bevorzugt 20 bis 40 Gew.% |

Erfindungsgemäß können kolloidale Kieselsäure enthaltende Polyole den Grundsätzen der Polyurethanchemie folgend mit mehrfunktionellen Isocyanaten wie beispielsweise Diphenylmethandiisocyanat (MDI), Toluylendiisocyanat (TDI) und verflüssigtem MDI umgesetzt werden. Abhängig vom angestrebten Anwendungsfall werden den reaktiven Mischungen Emulgatoren, Stabilisatoren, (Zell)Regler, wasserbindende Substanzen, Netzwerkbildner und Initiatoren, Katalysatoren oder Beschleuniger beigefügt. Geschäumte Polyurethansysteme können unter Verwendung von Wasser, leicht verdampfbaren Kohlenwasserstoffen oder deren Mischungen als Treibmittel erzeugt werden. Das Einbringen weiterer Additive wie Pigmente, brandwidrig wirkende Komponenten, leitfähige Pulver, wasserentziehende Mittel, bakterizide oder insektizide Zusatzstoffe ist möglich und vorteilhaft. Die Anwendungsformen der erzeugten Polyurethansysteme sind weitgehend frei wählbar und umfassen kalt- und warm-geschäumte harte Stoffe ebenso wie elastische, halbharte und integrale Schaumpolyurethane, Integralschäume aber auch Folien und kompakte elastische Materialien. Die Eigenschaften wie dynamisch-mechanisches Verhalten, Hydrophilie, Brandverhalten, Druckfestigkeit und Härte der erzeugten Polyurethane werden wie bereits die Eigenschaften der als Ausgangsstoffe für die Polyurethansynthesen verwendeten Organokolloide entscheidend von Anteil und Teilchengröße der kolloidalen Polykieselsäuren bestimmt.

Den Reaktionen können zweckmäßigerweise im wesentlichen in der Polyurethanchemie übliche Katalysatoren und Beschleuniger wie Triethanolamin, 1.4-Diazabicyclo(2.2.2)octan, Alkalisalze organischer Säuren und/oder Organometallverbindungen allein oder kombiniert zur Erhöhung der Umsatzgeschwindigkeit der Isocyanat-Additionsreaktionen zugesetzt werden. Den Polyurethansystemen können je nach Anwendungsfall weitere Zusatzstoffe wie additive Flammschutzmittel, Wasserbindemittel, Pigmente und/oder Magerungsmittel zugesetzt werden.

Die derart erzeugten Kieselsäure/Polyurethan-Nanocomposite weisen gegenüber analogen, unter Anwendung fein verteilter pulverförmiger kolloidaler Kieselsäure hergestellten Polyurethan ein verbessertes Eigenschaftsprofil auf, nämlich beispielsweise verbesserte Druckfestigkeit, niedrigere Dichte und erhöhte Brandwidrigkeit. Aufgrund der chemischen Struktur der Materialien sowie beispielsweise der Porengröße und -verteilung in geschäumten Polyurethanen ist außerdem zu erwarten, dass die Nanocomposite eine bessere Permeation für polare Permeanden zeigen oder über erhöhtes Schalldämmverhalten verfügen.

Die Vorteile der Erfindung lassen sich wie folgt zusammenfassen:
- Mit kolloidale Kieselsäure enthaltenden Oligo- bzw. Polyether- und Polyetherester alkoholen und Polyisocyanaten werden Polyadditionsreaktionen ausgeführt. Dabei entstehen Kieselsäure/Polyurethan-Nanocomposite.
- Die Kieselsäure/Polyurethan- Nanocompsite verfügen aufgrund der Nanoverteilung der Kieselsäure über ein besseres physikalischmechanisches Eigenschaftsprofil als analoge kieselsäurefreie Polyurethane.
- Die Einführung der Kieselsäure in verschiedene Polyole ermöglicht die Formulierung von Polyurethanrezepturen für weiche und harte, kompakte und geschäumte Materialien.
- Die katalytische und viskositätserhöhende Wirkung der Nanokieselsäure nimmt auf die Polyurethansynthese positiv Einfluß.

Weitere vorteilhafte Maßnahmen sind in den übrigen Unteransprüchen beschrieben; die Erfindung wird anhand von Ausführungsbeispielen nunmehr näher beschrieben.

### Ausführungsbeispiele zur Herstellung von nanoverteilter Kieselsäure enthaltenden Polyetheralkoholen

### Beispiel 1

In einem Rundkolben wird aus 425 g eines glycerinverzweigten Polyetherpolyols, das aus Propylenoxid und Ethylenoxideinheiten aufgebaut ist, 13 Gew.% Ethylenoxid bezogen auf Gesamtalkylenoxid enthält, bei 25°C über eine Viskosität von 850 mPas verfügt und eine Molmasse von 4800 g/mol aufweist, und 250 g eines wäßrigen Kieselsols durch intensives Schütteln eine Emulsion erzeugt. Diese wird durch Rotieren bei 50°C weiter intensiv homogenisiert. Anschließend wird das in der Emulsion enthaltene Wasser im Verlaufe von 2 Stunden quantitativ ausgetragen. Zuletzt wird eine weitere Stunde bei 21 mbar entgast. Danach liegen 504 g eines 15 Gew.% nanoverteilte Kieselsäure enthaltenden Polyetherpolyols vor, der bei 25°C über eine Viskosität von 1540 mPas und einen pH-Wert von 8,02 verfügt. Die Funktionalität des zugrunde liegenden Polyetherpolyols beträgt 2,5; seine OH-Zahl 35 in mg KOH/g.

### Beispiel 2

In einem Rundkolben werden 500 g eines acid eingestellten (pH bei 25°C = 5,0) wässrigen Kieselsäurekolloids (Kieselsols), dessen Viskosität 1,9 mPa s beträgt, mit einem Feststoffgehalt von 30 Gew.-% und der spezifischen Oberfläche der Polykieselsäure (SiO₂)ₓ von 100 m²/g mit 350 g Polyethylenglykol 600 und 100 mg Dodecyloligoethylenglykol-20 innig vermischt. Aus dieser Mischung werden unter gelindem Erwärmen bis 40°C (Wasserbad) bei zunehmendem Vakuum (Druck von 240 auf 25 mbar sinkend) im Verlaufe von 3 Stunden 347 g Wasser ausgetrieben. Es resultieren 496 g eines mittelviskosen, polyglykolbasierten Kieselsäurekolloids mit einem Feststoffgehalt von 30,4 Gew.-% (SiO₂)ₓ. Das OH-Equivalent des Organokolloids beträgt 0,703 Val OH / 300g Kolloid (2,34 mVal OH /g Kolloid), die Funktionalität des Basispolyols beträgt 2.

### Beispiel 3

34,3 g eines wässrigen Kieselsols mit dem pH-Wert 4,8 werden mit 24 g Polyethylenglykol 600, 5,52 g Propantriol und 8 mg Polyoxyethylen-20-stearylether im Rundkolben gemischt. Unter Rühren werden aus der Mischung bei 50°C und anliegendem Wasserstrahlvakuum im Verlaufe von 8 Stunden 23,95 g Wasser entfernt. Zuletzt wird ein Vakuum von 21 mbar erreicht. Danach liegt ein mittelviskoses Polyolgemisch vor, das 10,36 g (entsprechend 25,9 Gew.-%) kolloidale Polykieselsäure enthält. Das OH-Äquivalent des Organokolloids beträgt 0,2 Val OH/40 g Kolloid (5mVal OH / g Kolloid), die Funktionalität der zugrunde liegenden Polyolmischung beträgt 2,5 .

### Herstellung von Polyurethanen

### Beispiel 4

69 g des Polyols gemäß Beispiel 3 werden mit 3,24 g Triethanolamin und 0,32 ml Wasser im 0,5 I-Becher intensiv vermischt. Danach werden 63 g verflüssigtes Diphenylmethandiisocyanat hinzugefügt. Nach erneut intensivem Mischen beginnt der Schaum nach ca. fünf Minuten zu steigen. Gleichzeitig wird eine deutliche Erwärmung registriert. Der Schaum erreicht eine Steighöhe von 18,5 cm. Bei 80°C wird ca. 18 h nachgehärtet. Ein Schrumpf wird nicht festgestellt. Die Schaumstruktur ist gleichmäßig und die Rohdichte des Hartschaums wird zu 0,244 g/cm³ bestimmt. Der Kieselsäureanteil beträgt 14,6 Gew.-%. Die Porosität des Hartschaumstoff wird nach DIN 66133 an (20x20x40)mm³ messenden Probekörpem zu 66% ermittelt; die Druckfestigkeit beträgt 2,59 N/mm².

### Beispiel 5

Zu 68,75 g eines Polyols (d.s. 0,16 Val OH-Gruppen), das aus 150 g eines wässrigen Kieselsols, 105 g Polyethylenglykol 600 und 30 mg Ethylenoxid-20-stearylether hergestellt worden war, wurden 25,2 g Diphenylmethandiisocyanat (= 0,2 Val NCO-Gruppen), 0,8 ml Trichlorfluormethan und 2,16 g Triethanolamin hinzugefügt. Nach inniger Vermischung im 0,2l-Becher beginnt nach 4 bis 5 Minuten die Bildung eines Schaums, der eine Steighöhe von 9 bis 10 cm erreicht. Start- und Steigzeit sind dabei von der Umgebungstemperatur abhängig. Bei 80°C wird mehrere Stunden nachgehärtet. Es wird ein gemischtzelliger, elastischer Schaumsstoff erhalten. Dieser Kieselsäure/Polyurethan-Nanoverbund enthält 22 Gew.% an anorganischer Kieselsäure. Die Rohdichte beträgt 0,429 g/cm³.

### Beispiel 6

In 30,5 g eines Organokolloids mit 15 Gew.% nanoverteilter Kieselsäure, das unter Anwendung einer Mischung zweier Kurzketten verzweigter Polyetheralkohole erzeugt wurde, die durch Ethylenoxid- bzw. Propylenoxidaddition auf Trimethylolpropan synthetisiert worden sind, eine durchschnittliche mittlere Molmasse von 530 g/mol aufweisen und bei 25 °C eine Viskosität von 425 mPas besitzen, werden 1,72 g Triethanolamin und 0,8 g Pentan vorsichtig eingerührt. Dieses Gemisch wird in 13,75 g verflüssigtes Diphenylmethandiisocyanat, das im offenen Becher vorgelegt ist, eingetragen. Nach kräftigem Durchmischen setzt die Polyurethanbildung spontan ein. Es entsteht ein leichter, nicht schrumpffähiger Hartschaum, dessen Rohdichte 0,078 g/cm³ beträgt.

## Patentansprüche

1. Verfahren zur Herstellung von Kieselsäure/Polyurethan-Nanokompositen, **dadurch gekennzeichnet, dass**
a) in eine Polyol-Komponente anorganische kolloidale Kieselsäure unter Erhalt der nanoskaligen Partikel der anorganischen Kieselsäure eingearbeitet wird (= Organokieselsäurekolloide), wobei
aa) die Polyol-Komponente aus der Mischung wässriger Kieselsäurekolloide mit oligomeren und polymeren mehrfunktionellen Polyether- und Polyesteretheralkohole oder deren Mischungen hergestellt wird, und
ab)wobei das Wasser der wässrigen Kieselsäurekolloide bis zur Gewichtskonstanz im mäßigen Vakuum bei leicht erhöhter Temperatur entfernt wird,
b) und diese Organokieselsäurekolloide mit Polyisocyanaten in einer spontan ablaufenden Reaktion zur Polyurethanherstellung verwendet werden,
c) wobei
ca) wenigstens 10 Gew.% Ethylenoxidbausteine der Polyol-Komponente (bezogen auf Gesamtalkylenoxide) bei gleichzeitigem Vorliegen einer wenigstens zweifunktionellen OH-Endgruppenfunktionalität der organischen Komponente verwendet werden, oder
cb) bei Verwendung von weniger als 10 Gew.% Ethylenoxidbausteinen der Polyol-Komponente (bezogen auf Gesamtalkylenoxide) gleichzeitig wenigstens eine vierfunktionelle OH-Endgruppenfunktionalität der organischen Komponente vorliegen muss.

2. Verfahren nach einem oder mehreren der vorherigen Ansprüche, wobei die anorganische Kieselsäure mit einem Aluminiumgehalt der wässrigen Kieselsäurekolloide zwischen 0,01 - 1,00 Gew.%, bevorzugt 0,02 - 0,60 Gew.%, aluminiummodifiziert ist.

3. Verfahren nach einem oder mehreren der vorhergehenden Ansprüche, wobei den Mischungen aus anorganischer kolloidaler Kieselsäure und mehrfunktionellen organischen Komponenten grenzflächenaktive Substanzen wie Tenside, Benetzer, Verträglichkeitsvermittler, Emulgatoren und/oder Stabilisatoren beigefügt werden.

4. Verfahren nach einem oder mehreren der vorhergehenden Ansprüche, wobei die daraus resultierenden Kieselsäure/Polyurethan-Nanokomposite einen nanoverteilten Feststoffgehalt an anorganischer Kieselsäure von bis zu 30 Gew.% aufweisen.

5. Kieselsäure/Polyurethan-Nanokomposite, hergestellt durch das Verfahren gemäß den Ansprüchen 1 bis 5.

6. Verwendung der Kieselsäure/Polyurethan-Nanokomposite nach einem oder mehreren der vorhergehenden Ansprüche, wobei in Abhängigkeit von der jeweiligen Rezeptur frei- oder formgeschäumte, elastische bis harte und integrale Schaumpolyurethane, kompakte elastische Materialien und/oder Folien gebildet werden, die bis zu 30 Gew.-% an nanoskaliert verteilter anorganischer Polykieselsäure enthalten.

7. Verwendung nach Anspruch 6, wobei als weitere Zusatzstoffe additive Flammschutzmittel, Wasserbindemittel, Pigmente und/oder Magerungsmittel zugesetzt werden.

## Claims

1. Method to synthesize silicic acid /polyurethane nanocomposites, **characterized by**
a) incorporating an anorganic colloidal silicic acid into a polyol component while preserving the nanoscale particles of the anorganic colloidal silicic acid (organosilicic acid colloid), whereby
aa) the polyol component is synthesized from the mixture of aqueous silicic acid colloids with oligomeric and polymeric plurifunctional polyether and polyesterether alcohols or mixtures thereof, and
bb) whereby the water of the aqueous silicic acid colloids is removed to constant weight under mild vacuum and slightly increased temperature
b) and this organosilicic acid colloid is used in a spontaneously occurring reaction with polyisocyanates for polyurethan synthesis,
c) where
ca) at least 10 weight percent ethylene oxide parts of the polyol component (with respect to the total alkylene oxides) are used, whereby the organic component concurrently is at least bifunctional with respect to its OH end group functionality, or
cb) when using less than 10 weight percent ethylene oxide parts of the polyol component (with respect to the total alkylene oxides), the organic component must comprise concurrently an at least fourfold OH end group functionality.

2. Method according to one or several of the above claims, where the anorganic silicic acid is modified by aluminium with an aluminium content of the aqueous silicic acid colloids between 0,01 to 1,00 weight percent, preferably 0,02 to 0,60 weight percent.

3. Method according to one or several of the above claims, where surface active compounds such as tensides, surfactants, mediators of compatibility, emulgators or stabilizers are added to the mixtures from anorganic colloidal silicic acid and plurifunctional organic components.

4. Method according to one or several of the above claims, where the resulting silicic acid / polyurethane nanocomposites comprise a nanoscale-distributed content of anorganic silicic acid solid of up to 30 weight percent.

5. Silicic acid / polyurethane nanocomposite, synthesized by the method according to claims 1 to 4.

6. Use of the Silicic acid / polyurethane nanocomposite according to one or several of the preceding claims, where, depending on the respective recipe, freely formed or cast, elastic to hard and integral foam polyurethanes, compact elastic materials and/or foils are made, which comprise up to 30 weight percent of nanoscalar distributed anorganic polysilicic acid.

7. Use according to claim 6, where additive flame retardant compounds, water absorbents, pigments and / or grog are added as further additives.

## Revendications

1. Procédé de production de nanocomposites à base d'acide silicique / de polyuréthane, **caractérisé en ce que**
a) dans un composant polyol, on incorpore de l'acide silicique colloïdal inorganique en conservant les particules de l'acide silicique inorganique à l'échelle du nanomètre (= colloïdes d'acide organosilicique), où
aa) le composant polyol est produit à partir du mélange des colloïdes d'acide silicique aqueux avec des alcools de polyéther et de polyester multifonctionnels oligomères et polymères, ou leurs mélanges, et où
ab) l'eau des colloïdes d'acide silicique aqueux est éliminée jusqu'à constance de masse sous vide modéré et avec une température légèrement augmentée,
b) et **en ce que** ces colloïdes d'acide organosilicique sont utilisés avec des polyisocyanates dans une réaction de production de polyuréthane qui se déroule spontanément,
c) où
ca) au moins 10 % en masse des motifs oxyde d'éthylène du composant polyol (sur la base de la totalité des oxydes d'alkylène) sont utilisés en cas de présence simultanée d'une fonctionnalité de groupes terminaux OH au moins bifonctionnelle du composant organique, ou
cb) en cas d'utilisation de moins de 10 % en masse de motifs oxyde d'éthylène du composant polyol (sur la base de la totalité des oxydes d'alkylène), il doit exister simultanément au moins une fonctionnalité de groupes terminaux OH quadrifonctionnelle du composant organique.

2. Procédé selon une ou plusieurs des revendications précédentes, dans lequel l'acide silicique inorganique est modifié avec de l'aluminium, avec une teneur en aluminium des colloïdes d'acide silicique aqueux comprise entre 0,01 et 1,00 % en masse, de préférence entre 0,02 et 0,60 % en masse.

3. Procédé selon une ou plusieurs des revendications précédentes, dans lequel on ajoute aux mélanges composés d'acide silicique colloïdal inorganique et de composants organiques multifonctionnels des substances tensioactives comme des tensioactifs, des agents mouillants, des agents de compatibilité, des émulsifiants et/ou des stabilisants.

4. Procédé selon une ou plusieurs des revendications précédentes, dans lequel les nanocomposites obtenus à base d'acide silicique / de polyuréthane présentent une fraction solide d'acide silicique inorganique distribuée à l'échelle nanométrique allant jusqu'à 30 % en masse.

5. Nanocomposites à base d'acide silicique / de polyuréthane, produits par le procédé selon les revendications 1 à 4.

6. Utilisation de nanocomposites à base d'acide silicique / de polyuréthane selon une ou plusieurs des revendications précédentes, dans laquelle, en fonction de la formulation respective, on forme des mousses de polyuréthane élastiques à rigides et intégrales, à moussage libre ou en moule, des matériaux élastiques compacts et/ou des feuilles, qui contiennent jusqu'à 30 % en masse d'acide polysilicique inorganique distribué à l'échelle nanométrique.

7. Utilisation selon la revendication 6, dans laquelle on ajoute en tant qu'autres additifs des agents ignifuges d'addition, des liants aqueux, des pigments et/ou des agents amaigrissants.
